# EUROPÄISCHE PATENTANMELDUNG

(11) **EP 2 977 140 A1**
(43) Veröffentlichungstag der Anmeldung: **27.01.2016**
(21) Anmeldenummer: 14178026.2
(22) Anmeldetag: 22.07.2014
(51) Int. Cl.: B23K 35/30, B21C 37/02, B21C 37/06, B21C 37/08, B21C 37/26, B21D 53/16, B21D 53/20, B21C 1/00, B23K 35/02, C22C 5/06, C22C 5/08, C22C 9/00

(54) **Ringscheibe**

(71) Anmelder: Umicore AG & Co. KG, 63457 Hanau-Wolfgang (DE)
(72) Erfinder: Wiehl, Gunther, 63741 Aschaffenburg (DE); Hildebrandt, Sandra, 64846 Groß-Zimmern (DE); Hutin, Olivier, 63505 Langenselbold (DE)

(57) **Zusammenfassung**

Die Erfindung betrifft eine Ringscheibe aus gebogenem Metallband mit mindestens einer Verbindungsstelle, an der der Ring geschlossen ist.

## Beschreibung

Es ist bekannt Ringscheiben aus Metall herzustellen, in dem die gewünschte Form aus einem breiten Blech herausgestanzt wird. Bei diesem Stanzverfahren wird jedoch nur ein geringer Teil des eingesetzten Blechs zu Ringscheiben verarbeitet. So werden bei industriell üblichen Verfahren i.d.R. nur zwischen 10 % und 40 % des eingesetzten Bleches tatsächlich zu Ringscheiben verarbeitet. Der Rest verbleibt als Abfall und muss vor einer möglichen Wiederverwertung mit hohem Aufwand und Kosten erneut zu Blech aufgearbeitet werden. Deshalb sind Verfahren erwünscht, bei denen ein größerer Teil des eingesetzten Materials zu den Ringscheiben verarbeitet wird.

Die vorliegende Erfindung betrifft eine Ringscheibe aus gebogenem Metallband mit mindestens einer Verbindungsstelle, an der der Ring geschlossen ist, .

Eine weitere Ausführungsform der Erfindung ist ein Verfahren zur Herstellung einer Ringscheibe, umfassend die Schritte:
(a) Bereitstellen eines Metallbands;
(b) Biegen des Metallbands zu einer Ringscheibe;
(c) Durchtrennen des Metallbands, so dass eine Ringscheibe mit einer Verbindungsstelle, an der der Ring offen ist, bereitgestellt wird;
(d) Schließen der Verbindungsstelle, so dass eine Ringscheibe mit einer Verbindungsstelle, an der der Ring geschlossen ist, bereitgestellt wird.

Desweiteren betrifft die Erfindung ein Verfahren zur Herstellung einer Ringscheibe, umfassend die Schritte:
(i) Bereitstellen eines Metallbands;
(ii) Biegen des Metallbands zu einem ersten Teil einer Ringscheibe;
(iii) Durchtrennen des Metallbands, so dass ein erstes Teil einer Ringscheibe bereitgestellt wird;
(iv) mindestens einmaliges Wiederholen der Schritte (i), (ii) und (iii), so dass mindestens ein weiteres Teil der Ringscheibe bereitgestellt wird; und
(v) Verbinden des ersten und der weiteren Teile der Ringscheibe, so dass eine Ringscheibe mit mindestens zwei Verbindungsstellen, an die der Ring geschlossen ist, bereitgestellt wird.

### Kurze Beschreibung der Erfindung

1. Ringscheibe aus gebogenem Metallband mit mindestens einer Verbindungsstelle, an der der Ring geschlossen ist, wobei das Metallband aus einer Lotlegierung besteht mit der Zusammensetzung 41 Gew.-% bis 75 Gew.-% Kupfer, 20 Gew.-% bis 44 Gew.-% Silber, 5 Gew.-% bis 15 Gew.-% Gallium und 0 bis 15 Gew.-% weiterer Legierungsbestandteile, ausgewählt aus der Gruppe bestehend aus Indium, Zinn, Germanium, Titan, Mangan, Silizium, Nickel und deren Kombinationen, wobei sich die Bestandteile zu 100 Gew.-% ergänzen und unvermeidbare Verunreinigungen enthalten können und der Gehalt an Zink 0,01 Gew.-% nicht übersteigen darf.
2. Ringscheibe nach Punkt 1, wobei der Germaniumgehalt der Lotlegierung weniger als 1,5 Gew.-% beträgt.
3. Ringscheibe nach Punkt 1 oder 2, wobei die Lotlegierung 25 bis 44 Gew.-% Silber, 45 bis 60 Gew.-% Kupfer, 6 Gew.-% bis 14 Gew.-% Gallium oder Kombinationen daraus enthält.
4. Ringscheibe nach einem der Punkte 1 bis 3, wobei das Metallband eine Vickers-Härte von bis zu HV1 220 aufweist.
5. Ringscheibe nach einem der Punkte 1 bis 4, wobei der Gehalt an Gallium größer als 10 Gew.-% ist, wenn der Mangangehalt kleiner als 10 Gew.-% ist ist.
6. Ringscheibe nach einem der Punkte 1 bis 5, wobei das Lotmaterial eine Zusammensetzung aufweist, die ausgewählt ist aus der Gruppe bestehend aus 48 Gew.-% bis 67 Gew.-% Kupfer, 20 Gew.-% bis 25 Gew.-% Silber, 5 bis 15 Gew.-% Gallium, 0 Gew.-% bis 15 Gew.-% Mangan, 0 Gew.-% bis 3 Gew.-% Indium, wobei der Gehalt an Mangan größer als 10 Gew.-% ist, wenn der Galliumgehalt kleiner als 10 Gew.-% ist und die Mengen sich zu 100 Gew.-% ergänzen;
   58 Gew.-% bis 65 Gew.-% Kupfer, 20 Gew.-% bis 25 Gew.-% Silber, 5 bis 15 Gew.-% Gallium, 0 Gew.-% bis 15 Gew.-% Mangan, 0 Gew.-% bis 3 Gew.-% Indium, wobei der Gehalt an Mangan größer als 10 Gew.-% ist, wenn der Galliumgehalt kleiner als 10 Gew.-% ist, und die Mengen sich zu 100 Gew.-% ergänzen;
   41 Gew.-% bis 54 Gew.-% Kupfer, 38 Gew.-% bis 42 Gew.-% Silber, 8 bis 12 Gew.-% Gallium, 0 Gew.-% bis 5 Gew.-% Mangan, 0 Gew.-% bis 4 Gew.-% Indium, wobei die Mengen sich zu 100 Gew.-% ergänzen;
   41 Gew.-% bis 52 Gew.-% Kupfer, 38 Gew.-% bis 42 Gew.-% Silber, 5 bis 9 Gew.-% Gallium, 7 Gew.-% bis 12 Gew.-% Mangan, 0 Gew.-% bis 4 Gew.-% Indium, wobei die Mengen sich zu 100 Gew.-% ergänzen;
   50 Gew.-% bis 64 Gew.-% Kupfer, 28 Gew.-% bis 34 Gew.-% Silber, 8 bis 12 Gew.-% Gallium, 0 Gew.-% bis 5 Gew.-% Mangan, 0 Gew.-% bis 4 Gew.-% Indium, wobei die Mengen sich zu 100 Gew.-% ergänzen;
   45 Gew.-% bis 62 Gew.-% Kupfer, 28 Gew.-% bis 34 Gew.-% Silber, 5 bis 9 Gew.-% Gallium, 7 Gew.-% bis 12 Gew.-% Mangan, 0 Gew.-% bis 4 Gew.-% Indium, wobei die Mengen sich zu 100 Gew.-% ergänzen.
7. Ringscheibe nach einem oder mehreren der vorstehenden Punkte, wobei die Lotlegierung weitere Legierungsbestandteile ausgewählt aus der Gruppe bestehend aus 0,5 Gew.-% bis 15 Gew.-% Mangan, 0,1 Gew.-% bis 5 Gew.- % Nickel, 0,5 Gew.-% bis 7 Gew.-% Indium, 0,3 Gew.-% bis 3 Gew.-% Zinn, 0,3 Gew.-% bis 1,5 Gew.-% Germanium, 0,1 Gew.-% bis 4 Gew.-% Titan, 0,1 Gew.-% bis 1 Gew.-% Silizium und deren Kombinationen enthält.
8. Ringscheibe nach einem der Punkte 1 bis 7, wobei die Lotlegierung ausgewählt ist aus der Gruppe bestehend aus einer Lotlegierung, bestehend aus 40 Gew.-% Silber, 50 Gew.-% Kupfer und 10 Gew.-% Gallium; oder einer Lotlegierung, bestehend aus 40 Gew.-% Silber, 46,5 Gew.-% Kupfer, 10 Gew.-% Gallium, 3 Gew.-% Indium und 0,5 Gew,-% Zinn; oder einer Lotlegierung, bestehend aus 5 bis 15 Gew.-% Gallium, wobei die verbleibende Zusammensetzung (ad 100 Gew.-%) Ag, Cu im proportionalen Verhältnis von 25 : 61 bis 44 : 45 ist.
9. Verfahren zur Herstellung einer Ringscheibe nach einem oder mehreren der Punkte 1 bis 8, umfassend die Schritte:
   (a) Bereitstellen eines Metallbands aus einer Lotlegierung nach einem oder mehreren der Punkte 1 bis 8;
   (b) Biegen des Metallbands zu einer Ringscheibe;
   (c) Durchtrennen des Metallbands, so dass eine Ringscheibe mit einer Verbindungsstelle, an der der Ring offen ist, bereitgestellt wird;
   (d) Schließen der Verbindungsstelle, so dass eine Ringscheibe mit einer Verbindungsstelle, an der der Ring geschlossen ist, bereitgestellt wird.
10. Verfahren zur Herstellung einer Ringscheibe, umfassend die Schritte:
   (i) Bereitstellen eines Metallbands aus einer Lotlegierung nach einem oder mehreren der Punkte 1 bis 8;
   (ii) Biegen des Metallbands zu einem ersten Teil einer Ringscheibe;
   (iii) Durchtrennen des Metallbands, so dass ein erstes Teil einer Ringscheibe bereitgestellt wird;
   (iv) mindestens einmaliges Wiederholen der Schritte (i), (ii) und (iii), so dass mindestens ein weiteres Teil der Ringscheibe bereitgestellt wird; und
   (v) Verbinden des ersten und der weiteren Teile der Ringscheibe, so dass eine Ringscheibe mit mindestens zwei Verbindungsstellen, an die der Ring geschlossen ist, bereitgestellt wird.
11. Verfahren nach Punkt 10, wobei das erste Teil der Ringscheibe und das mindestens eine weitere Teil der Ringscheibe jeweils halbe Ringscheiben sind.
12. Verfahren nach Punkt 9 oder 10, wobei die Verbindungsstelle durch Löten oder Schweißen verbunden wird.
13. Verfahren nach Punkt 12, wobei das Schweißen aus Widerstandsschweißen und Laserschweißen ausgewählt ist.
14. Verfahren nach einem der Punkte 9 bis 13, wobei das Metallband eine Breite von 0,5 bis 15 mm aufweist.
15. Verfahren nach einem der Punkte 9 bis 14, wobei das Biegen des Metallbands zu einer Ringscheibe bzw. einem Teil einer Ringscheibe durchgeführt wird, in dem das Metallband hochkant um einen Stab gewickelt wird.
16. Ringscheibe nach einem oder mehreren der Punkte 1 bis 8, die leichte Wölbungen quer zur Stegbreite aufweist.
17. Vakuumschaltkammer, welche durch Löten mit einer Ringscheibe nach einem oder mehreren der Punkte 1 bis 8 oder 16 erhältlich ist.

### Kurze Beschreibung der Zeichnungen

- Figur 1: zeigt erfindungsgemäße Ringscheiben mit ein, zwei bzw. drei Verbindungsstellen.
- Figur 2: zeigt eine mögliche Vorrichtung zum Biegen des Metallbands.
- Figur 3: zeigt eine weitere mögliche Vorrichtung zum Biegen des Metallbands.
- Figur 4: zeigt eine andere Ausführungsform einer Vorrichtung zum Biegen des Metallbands.
- Figur 5: zeigt noch eine weitere mögliche Vorrichtung zum Biegen des Metallbands.
- Figur 6: zeigt eine erfindungsgemäße Ringscheibe.

### Detaillierte Beschreibung der Erfindung

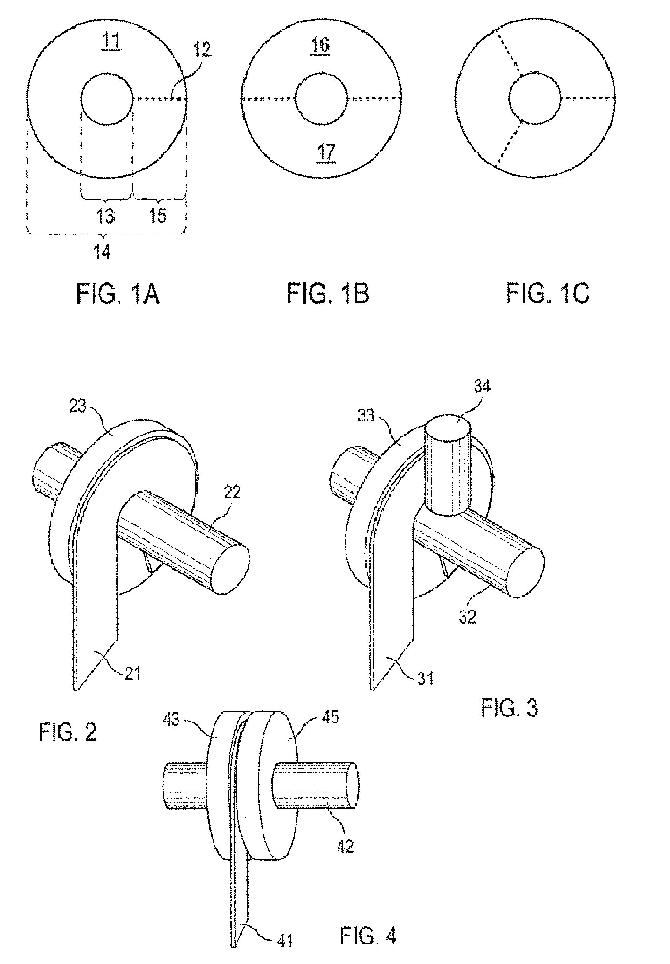

Erfindungsgemäße Ringscheiben sind in Figur 1 gezeigt. In Figur 1A weist die Ringscheibe 11 eine Verbindungsstelle 12 auf. Die Ringscheibe ist durch einen Innendurchmesser 13, einen Außendurchmesser 14 und eine Stegbreite 15 gekennzeichnet. In Figur 1B ist eine weitere erfindungsgemäße Ringscheibe mit zwei Verbindungsstellen gezeigt. Obwohl in der Figur 1B der erste Teil der Ringscheibe 16 und der zweite Teil der Ringscheibe 17 beide gleich groß dargestellt sind, ist dies lediglich bevorzugt. Es ist ebenfalls möglich die Ringscheibe aus unterschiedlich großen Teilen zusammenzufügen. In Figur 1C ist eine erfindungsgemäße Ringscheibe mit drei Verbindungsstellen gezeigt.

Die erfindungsgemäßen Ringscheiben weisen mindestens eine Verbindungsstelle auf. Die Zahl der Verbindungsstellen ist nicht besonders begrenzt und beträgt im Allgemeinen ein bis vier Verbindungsstellen. Besonders bevorzugt sind Ringscheiben mit zwei bis vier Verbindungsstellen, stärker bevorzugt mit zwei Verbindungsstellen, da beim Biegen von Teilen von Ringscheiben eine geringere Neigung zu Wölbungen und Falten besteht als beim Biegen von ganzen Ringscheiben, die nur eine Verbindungsstelle erfordern.

Bei beiden erfindungsgemäßen Verfahren wird zunächst ein Metallband bereitgestellt. Das Metallband ist i.A. ein längliches, streifenförmiges Material, dessen Breite, Dicke und Länge nicht besonders beschränkt sind. Das Metallband weist eine Breite auf, die der Stegbreite der herzustellenden Ringscheibe entspricht. Typische Breiten sind von 0,5 mm bis 15 mm, bevorzugt 2 mm bis 10 mm. Die Dicke des Metallbands entspricht ebenfalls im Wesentlichen der gewünschten Dicke der Ringscheibe. Sie kann beispielsweise von 0,005 mm bis 0,30 mm, bevorzugt von 0,15 mm bis 0,20 mm, variieren. Die minimale Länge des Metallbands ist nicht begrenzt, sofern das Metallband mindestens so lang ist, dass eine Ringscheibe bzw. ein Teil einer Ringscheibe daraus geformt werden kann. Die maximale Länge des Metallbands ist nicht begrenzt, da aus einem langen Streifen nach dem Biegen durch Durchtrennen Stücke der gewünschten Länge erhalten werden. Im Allgemeinen wird das Metallband als Rollenware eingesetzt. Es ist aber ebenfalls möglich kurze Streifen einzusetzen.

Das Metallband kann aus jedem beliebigen Material bestehen, das mit dem erfindungsgemäßen Verfahren zu einer Ringscheibe geformt werden kann.
In Hinblick auf die Dehnbarkeit des Metallbands werden bevorzugt Metallbänder mit einer Vickers-Härte von höchstens HV1 220, bevorzugt von HV1 100 bis HV1 210, stärker bevorzugt von HV1 119 bis HV1 203, verwendet. Die Vickers-Härte kann nach DIN 50133 gemessen werden.

Gemäß der Erfindung besteht das Metallband aus Lotmaterial mit der Zusammensetzung 20 Gew.-% bis 44 Gew.-% Silber, 5 Gew.-% bis 15 Gew.-% Gallium und ad 100 Gew.-% Kupfer, wobei die Bestandteile unvermeidbare Verunreinigungen enthalten können.

Die Lotlegierungen enthalten 41 Gew.-% bis 75 Gew.-% oder 45 bis 60 Gew.-% Kupfer, 20 Gew.-% bis 44 Gew.-% Silber, oder 25 bis 44 Gew.-% oder 30 bis 44 Gew.-Silber, und 5 Gew.-% bis 15 Gew.-% oder 6 Gew.-% bis 14 Gew.-% Gallium, wobei die Bestandteile sich zu 100 Gew.-% ergänzen und unvermeidbare Verunreinigungen enthaltend können.

In einer spezifischen Ausführungsform kann die Lotlegierung 20 Gew.-% bis 44 Gew.-% Silber, 5 Gew.-% bis 15 Gew.-% Gallium, 0,1 Gew.-% bis 15 Gew.-% oder 0,1 Gew.-% bis 10 Gew.-% weiterer Legierungselemente ausgewählt aus der Gruppe bestehend aus Indium, Zinn, Germanium, Titan, Mangan, Silizium, Nickel und deren Kombinationen und ad 100 Gew.-% Kupfer enthalten, wobei sich die Bestandteile zu 100 Gew.-% ergänzen und unvermeidbare Verunreinigungen enthaltend können.

Die Lotlegierungen enthalten 41 Gew.-% bis 75 Gew.-% oder 45 bis 60 Gew.-% Kupfer, 20 Gew.-% bis 44 Gew.-% Silber, oder 25 bis 44 Gew.-% oder 30 bis 44 Gew.-Silber, 5 Gew.-% bis 15 Gew.-% oder 6 Gew.-% bis 14 Gew.-% Gallium, sowie 0,1 Gew.-% bis 15 Gew.-% oder 0,1 Gew.-% bis 10 Gew.-% weiterer Legierungselemente ausgewählt aus der Gruppe bestehend aus Indium, Zinn, Germanium, Titan, Mangan, Silizium, Nickel und deren Kombinationen, wobei die Bestandteile sich zu 100 Gew.-% ergänzen und unvermeidbare Verunreinigungen enthaltend können.

In einer besonderen Ausführungsform weist die Lotlegierung die Zusammensetzung auf von 41 Gew.-% bis 75 Gew.-% Kupfer, 20 Gew.-% bis 44 Gew.-% Silber, 5 Gew.-% bis 15 Gew.-% Gallium und 0 bis 15 Gew.-% weiterer Legierungsbestandteile, ausgewählt aus der Gruppe bestehend aus Indium, Zinn, Germanium, Titan, Mangan, Silizium, Nickel und deren Kombinationen, wobei sich die Bestandteile zu 100 Gew.-% ergänzen und unvermeidbare Verunreinigungen enthalten können und der Gehalt an Zink 0,01 Gew.-% nicht übersteigen darf.

In einer weiteren spezifischen Ausführungsform enthält die Lotlegierung Indium in Kombination mit Zinn, Titan, Mangan oder deren Kombinationen.

Die Lotlegierung kann weiter 0,5 Gew.-% bis 7 Gew.-% Indium, 0,3 Gew.-% bis 3 Gew.-% Zinn, 0,3 Gew.-% bis 3 Gew.-% Germanium oder 0,3 Gew.-% bis 1,5 Gew.-% Germanium, 0,1 Gew.-% bis 4 Gew.-% Titan, 0,5 Gew.-% bis 15 Gew.-% oder auch 0,5 Gew.-% bis 10 Gew.-% Mangan, 0,1 Gew.-% bis 1 Gew.-% Silizium, 0,1 Gew.-% bis 5 Gew.-% oder 1 Gew.-% bis 4 Gew.-% Nickel oder deren Kombinationen in den entsprechenden Mengen enthalten, wobei sich die Bestandteile zu 100% ergänzen und unvermeidbare Verunreinigungen enthalten können.

Die Legierungen können auch insgesamt bis zu 0,15 Gew.-% an tolerierten, nicht vermeidbaren Verunreinigungen enthalten, z. B. Lithium, Natrium, Kalium, Rubidium, Cäsium, Beryllium, Magnesium, Calcium, Strontium, Barium, Antimon, Selen, Tellur, Eisen, Zink, Silicium, Phosphor, Schwefel, Platin, Palladium, Blei, Gold, Aluminium, Zinn, Germanium, Kohlenstoff, Cadmium, Scandium, Lanthan, Cer, Praseodym, Neodym, Promethium, Samarium, Europium, Yttrium, Gadolinium, Terbium, Dysprosium, Holmium, Erbium, Thulium, Ytterbium, Lutetium und Sauerstoff. Der Gehalt von Kohlenstoff sollte nicht größer sein als 0,005 Gew.-%, die Gehalte von Cadmium, Phosphor, Blei und Zink nicht größer als jeweils 0,01 Gew.-%.
Der Gesamtgehalt der Menge an Lithium, Natrium, Kalium, Rubidium, Cäsium, Beryllium, Magnesium, Calcium, Strontium, Barium, Antimon, Selen, Tellur, Schwefel beträgt insbesondere 0,01 Gew.-% oder weniger.

In einer weiteren Ausführungsform besteht die Legierung aus 48 Gew.-% bis 67 Gew.-% Kupfer, 20 Gew.-% bis 25 Gew.-% Silber, 5 bis 15 Gew.-% Gallium, 0 Gew.-% bis 15 Gew.-% Mangan, 0 Gew.-% bis 3 Gew.-% Indium, wobei der Gehalt an Mangan größer als 10 Gew.-% ist, wenn der Galliumgehalt kleiner als 10 Gew.- % ist und die Mengen sich zu 100 Gew.-% ergänzen. Gute Ergebnisse sind auch erreichbar, wenn der Gehalt an Gallium größer als 10 Gew.-% ist, wenn der Mangangehalt kleiner als 10 Gew.-% ist.
In einer weiteren Ausführungsform besteht die Legierung aus 58 Gew.-% bis 65 Gew.-% Kupfer, 20 Gew.-% bis 25 Gew.-% Silber, 5 bis 15 Gew.-% Gallium, 0 Gew.-% bis 15 Gew.-% Mangan, 0 Gew.-% bis 3 Gew.-% Indium, wobei der Gehalt an Mangan größer als 10 Gew.-% ist, wenn der Galliumgehalt kleiner als 10 Gew.- % ist und die Mengen sich zu 100 Gew.-% ergänzen. Gute Ergebnisse sind auch erreichbar, wenn der Gehalt an Gallium größer als 10 Gew.-% ist, wenn der Mangangehalt kleiner als 10 Gew.-% ist.
Es wurde überraschend gefunden, daß selbst Legierungen mit niedrigen Silbergehalten von 20 Gew.-% bis 25 Gew.-% die gewünschten Eigenschaften aufweisen, sofern die Gehalte von Gallium oder Mangan oberhalb von 10 Gew.-% liegen. In diesem Fall können mit einem Indiumgehalt von 1 bis 3 Gew.-% ebenfalls gute Ergebnisse erzielt werden.

In einer weiteren Ausführungsform besteht die Legierung aus 41 Gew.-% bis 54 Gew.-% Kupfer, 38 Gew.-% bis 42 Gew.-% Silber, 8 bis 12 Gew.-% Gallium, 0 Gew.-% bis 5 Gew.-% Mangan, 0 Gew.-% bis 4 Gew.-% Indium, wobei die Mengen sich zu 100 Gew.-% ergänzen.
In einer weiteren Ausführungsform besteht die Legierung aus 41 Gew.-% bis 52 Gew.-% Kupfer, 38 Gew.-% bis 42 Gew.-% Silber, 5 bis 9 Gew.-% Gallium, 7 Gew.-% bis 12 Gew.-% Mangan, 0 Gew.-% bis 4 Gew.-% Indium, wobei die Mengen sich zu 100 Gew.-% ergänzen.

In einer weiteren Ausführungsform besteht die Legierung aus 50 Gew.-% bis 64 Gew.-% Kupfer, 28 Gew.-% bis 34 Gew.-% Silber, 8 bis 12 Gew.-% Gallium, 0 Gew.-% bis 5 Gew.-% Mangan, 0 Gew.-% bis 4 Gew.-% Indium, wobei die Mengen sich zu 100 Gew.-% ergänzen.

In einer weiteren Ausführungsform besteht die Legierung aus 45 Gew.-% bis 62 Gew.-% Kupfer, 28 Gew.-% bis 34 Gew.-% Silber, 5 bis 9 Gew.-% Gallium, 7 Gew.-% bis 12 Gew.-% Mangan, 0 Gew.-% bis 4 Gew.-% Indium, wobei die Mengen sich zu 100 Gew.-% ergänzen.

Die Lotlegierung ist gemäß der Erfindung ein Hartlotmaterial bzw. Hartlot. Hartlotmaterialien sind bspw. Lotmaterialien, die einen Schmelzpunkt von mindestens 450 °C aufweisen. Sie können eingesetzt werden, um hochvakuumdichte Verbindungen bspw. bei Vakuumschaltröhren herzustellen. Diese Lötverbindungen sind hochbelastbar und können hochvakuumdichtigkeit von 10⁻⁷ mbar über mindestens 20 Jahre gewährleisten. Als Beispiele für herkömmliche Hartlotmaterial können Hartlotlegierungen auf Silber-Kupfer-Basis (wie Ag₇₂Cu₂₈ und Ag_{69,7}Cu₂₈Ge₂Co_{0,3}) und Silber-Kupfer-Palladium-Basis (wie Ag_{68,4}Cu_{26,6}Pd₅, Ag₆₅Cu₂₀Pd₁₅ und Ag₅₄Cu₂₁Pd₂₅ genannt werden. Gegenstand der Erfindung sind jedoch Lotringe aus bestimmten Lotlegierungen wie oben beschrieben.

Das bereitgestellte Metallband wird zu einer Ringscheibe oder einem Teil einer Ringscheibe gebogen. In einer bevorzugten Ausführungsform wird das Metallband 21, wie in Figur 2 gezeigt, hochkant um einen Stab 22 gewickelt. Der Durchmesser des Stabes sollte dabei im Wesentlichen dem Innendurchmesser der gewünschten Ringscheibe entsprechen. Der Durchmesser des Stabes ist nicht besonders beschränkt und beträgt typischerweise 25 mm bis 290 mm, bevorzugt 40 mm bis 140 mm.

Um zu verhindern, dass die Ringscheibe oder der Teil der Ringscheibe beim Biegen nicht eben wird, da sich das Metallband 21 beispielsweise wölbt oder sich übermäßig viele Falten bilden, kann das Metallband 21 während des Biegevorgangs z.B. auf eine auf dem Stab 22 angebrachte Platte 23 anliegen. Das Anliegen kann, falls erforderlich, auf verschiedene Arten unterstützt werden. Zum Beispiel wäre es möglich das Metallband 21 in einem geeigneten Winkel zuzuführen, so dass es anliegt oder es kann, wie in Figur 3 gezeigt, eine Andrückwalze 34 oder eine andere entsprechende Vorrichtung verwendet werden. Eine weitere mögliche Bandführung ist in Figur 4 dargestellt. Hierbei wird das Metallband 41 zwischen zwei Kreisscheiben 43 und 45 geführt, die an dem Stab 42 befestigt sind. Gegebenenfalls kann die Führung des Bandes auch durch eine nicht an den Stab angebrachte Platte oder eine von dem Stab getrennte Vorrichtung erfolgen. Auch in dieser Ausführungsform kann die Planarität der Ringscheibe durch entsprechende weitere Maßnahmen oder Vorrichtungen unterstützt werden.

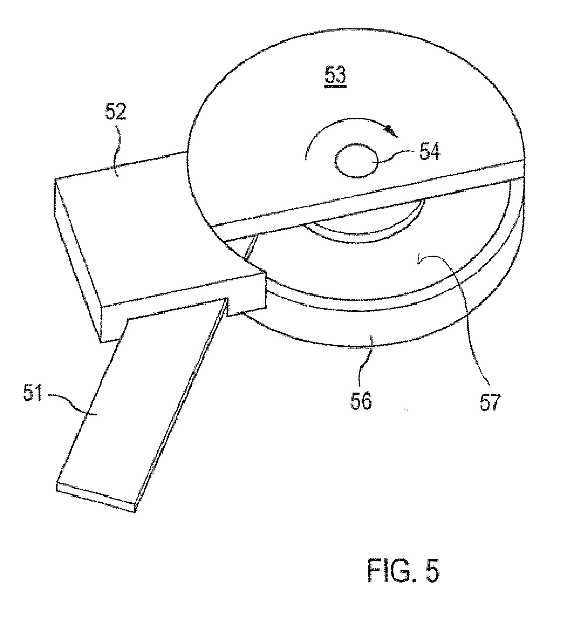

Figur 5 zeigt eine weitere Vorrichtung zum Biegen des Metallbands. Das Metallband 51 wird mittels einer Führung 52 so zugeführt, dass es in einer Vertiefung 57 einer unteren Platte 56 geführt wird. Eine obere Platte53, die drehbar um einen Stab 54 gelagert ist, führt das Metallband mit.

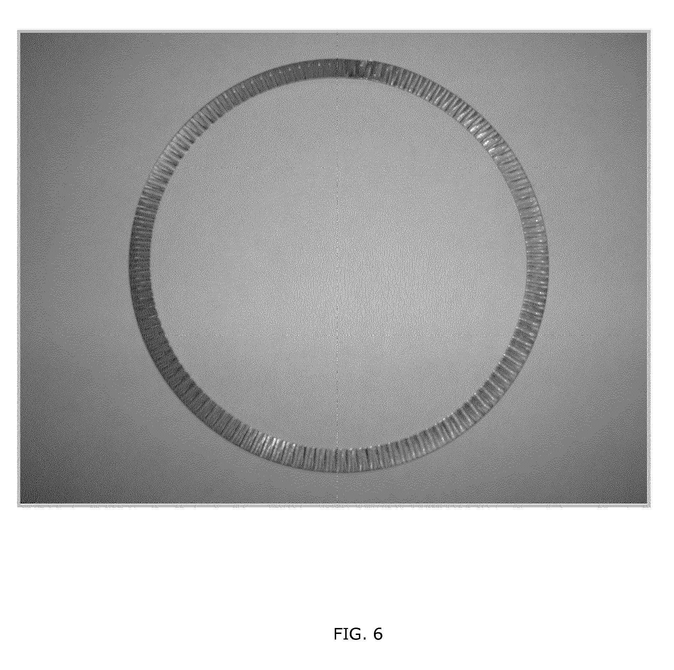

Es ist möglich, dass beim erfindungsgemäßen Verfahren Ringscheiben erhalten werden, die leichte Wölbungen quer zur Stegbreite aufweisen (Figur 6). Diese Wölbungen beeinflussen den Gebrauch der Ringscheiben, vor allem beim Einsatz als Lotmaterial, nicht negativ. Beim Einsatz in Vakuumanwendungen, wie z.B. beim Löten von Vakuumschaltkammern verhindern die Wölbungen zunächst ein luftdichtes Abschließen, so daß im Vakuum zunächst Luft aus dem Inneren der Vakuumschaltkammer (oder anderen zu lötenden Hohlkörpern, die ein Vakuum in Inneren aufweisen, wie z.B. Röntgenröhren) nach außen entweichen kann und erst mit dem Abschluß des Lotvorganges ein luftdichter Abschluß der Verbindungsstelle erzielt wird.

Nach dem Biegen der Ringscheibe oder des ersten Teils der Ringscheibe wird das Metallband durchgetrennt. Bei der zweiten Ausführungsform des erfindungsgemäßen Verfahrens, bei dem die Ringscheibe aus mehreren Teilen zusammengesetzt wird, werden anschließend die vorstehend beschriebenen Schritte (i), (ii) und (iii) wiederholt, wobei ein oder mehrere weitere Teile der Ringscheibe bereitgestellt werden, die sich zu einer vollständigen Ringscheibe zusammenfügen lassen.

In einem letzten Verfahrensschritt wird die Verbindungsstelle bzw. werden die Verbindungsstellen der Ringscheibe verbunden, so dass eine vollständige Ringscheibe bereitgestellt wird. Die Verfahren zum Verbinden der Verbindungsstellen sind nicht besonders beschränkt. Im Allgemeinen wird das Verfahren zum Verbinden der Verbindungsstellen in Abhängigkeit von dem verwendeten Metallband geeignet ausgewählt. Als mögliche Verfahren lassen sich Löten und Schweißen, insbesondere Widerstandsschweißen und Laserschweißen, nennen.

Eine Ringscheibe, die gebogen wurde, deren Verbindungsstelle aber nicht verbunden ist, ist nachteilig. Da die Verbindungsstelle nicht verbunden ist, können sich die beiden Enden des Metallbands an der Verbindungsstelle während der Herstellung, der Lagerung oder der Anwendung voneinander entfernen, so dass die Ringscheibe nicht mehr eben ist. Zu dem sind solche Ringscheiben nachteilig, da die offene Verbindungsstelle sich mit anderen Ringscheiben, den verwendeten Vorrichtungen, Aufbewahrungsbehältern und dergleichen verhaken kann, und anschließend die verhakte Ringscheibe mühsam per Hand wieder abgelöst werden muss.

Die Erfindung betrifft auch Vakuumschaltkammern, welche durch Löten mit einem Lotring gemäß der vorliegenden Patentanmeldung erhältlich sind.
Hierzu können die miteinander vakuumdicht zu verlötenden Teile der Vakuumschaltkammern mit Lot, versehen werden, insbesondere mit mindestens einem Lotring gemäß der vorliegenden Patentanmeldung, und werden anschließend einem Lötverfahren unterworfen. In diesem Lötverfahren kann insbesondere der Lotring derart auf eine Temperatur oberhalb der Schmelztemperatur der Lotlegierung erwärmt werden, daß das Lot schmilzt und die zu verlötenden Teile der Vakuumschaltkammer benetzt, und zwar zumindest teilweise benetzt, und anschließend derart auf eine Temperatur abgekühlt werden, so daß die Lotlegierung -gegebenenfalls mit ablegierten Legierungsbestandteilen der Vakuumschaltkammer - erstarrt und eine luftdichte Lötstelle ausbildet.

## Patentansprüche

1. Ringscheibe aus gebogenem Metallband mit mindestens einer Verbindungsstelle, an der der Ring geschlossen ist, wobei das Metallband aus einer Lotlegierung besteht mit der Zusammensetzung 41 Gew.-% bis 75 Gew.-% Kupfer, 20 Gew.-% bis 44 Gew.-% Silber, 5 Gew.-% bis 15 Gew.-% Gallium und 0 bis 15 Gew.-% weiterer Legierungsbestandteile, ausgewählt aus der Gruppe bestehend aus Indium, Zinn, Germanium, Titan, Mangan, Silizium, Nickel und deren Kombinationen, wobei sich die Bestandteile zu 100 Gew.-% ergänzen und unvermeidbare Verunreinigungen enthalten können und der Gehalt an Zink 0,01 Gew.-% nicht übersteigen darf.

2. Ringscheibe nach Anspruch 1, wobei der Germaniumgehalt der Lotlegierung weniger als 1,5 Gew.-% beträgt.

3. Ringscheibe nach Anspruch 1 oder 2, wobei die Lotlegierung 25 bis 44 Gew.-% Silber, 45 bis 60 Gew.-% Kupfer, 6 Gew.-% bis 14 Gew.-% Gallium oder Kombinationen daraus enthält.

4. Ringscheibe nach einem der Ansprüche 1 bis 3, wobei die Lotlegierung ausgewählt ist aus der Gruppe bestehend aus einer Lotlegierung, bestehend aus 40 Gew.-% Silber, 50 Gew.-% Kupfer und 10 Gew.-% Gallium; oder einer Lotlegierung, bestehend aus 40 Gew.-% Silber, 46,5 Gew.-% Kupfer, 10 Gew.-% Gallium, 3 Gew.-% Indium und 0,5 Gew,-% Zinn; oder einer Lotlegierung, bestehend aus 5 bis 15 Gew.-% Gallium, wobei die verbleibende Zusammensetzung (ad 100 Gew.-%) Ag, Cu im proportionalen Verhältnis von 25 : 61 bis 44 : 45 ist.

5. Verfahren zur Herstellung einer Ringscheibe nach einem oder mehreren der Ansprüche 1 bis 4, umfassend die Schritte:
(a) Bereitstellen eines Metallbands aus einer Lotlegierung nach einem oder mehreren der Ansprüche 1 bis 4;
(b) Biegen des Metallbands zu einer Ringscheibe;
(c) Durchtrennen des Metallbands, so dass eine Ringscheibe mit einer Verbindungsstelle, an der der Ring offen ist, bereitgestellt wird;
(d) Schließen der Verbindungsstelle, so dass eine Ringscheibe mit einer Verbindungsstelle, an der der Ring geschlossen ist, bereitgestellt wird.

6. Verfahren zur Herstellung einer Ringscheibe, umfassend die Schritte:
(i) Bereitstellen eines Metallbands aus einer Lotlegierung nach einem oder mehreren der Ansprüche 1 bis 4;
(ii) Biegen des Metallbands zu einem ersten Teil einer Ringscheibe;
(iii) Durchtrennen des Metallbands, so dass ein erstes Teil einer Ringscheibe bereitgestellt wird;
(iv) mindestens einmaliges Wiederholen der Schritte (i), (ii) und (iii), so dass mindestens ein weiteres Teil der Ringscheibe bereitgestellt wird; und
(v) Verbinden des ersten und der weiteren Teile der Ringscheibe, so dass eine Ringscheibe mit mindestens zwei Verbindungsstellen, an die der Ring geschlossen ist, bereitgestellt wird.

7. Verfahren nach Anspruch 5 oder 6, wobei die Verbindungsstelle durch Löten oder Schweißen verbunden wird.

8. Verfahren nach einem der Ansprüche 5 bis 7, wobei das Biegen des Metallbands zu einer Ringscheibe bzw. einem Teil einer Ringscheibe durchgeführt wird, in dem das Metallband hochkant um einen Stab gewickelt wird.

9. Ringscheibe nach einem oder mehreren der Ansprüche 1 bis 4, die leichte Wölbungen quer zur Stegbreite aufweist.

10. Vakuumschaltkammer, welche durch Löten mit einer Ringscheibe nach einem oder mehreren der Ansprüche 1 bis 4 oder 9 erhältlich ist.
